# EUROPÄISCHE PATENTSCHRIFT

(11) **EP 0 592 025 B1**
(45) Veröffentlichungstag und Bekanntmachung des Hinweises auf die Patenterteilung: **20.03.1996**
(21) Anmeldenummer: 93202613.1
(22) Anmeldetag: 07.09.1993
(51) Int. Cl.: B01D 53/34, B01D 53/70

(54) **Verfahren zur Abtrennung von halogenierten Dioxinen und Furanen aus Abgasen von Verbrennungsanlagen**
Process for seperating halogenated dioxins and furans from exhaust gases from combustion devices
Procédé pour séparer des dioxines et furanes halogénés des gaz d'échappement de dispositifs de combustion

(30) Priorität: 03.10.1992 DE 4233303
(43) Veröffentlichungstag der Anmeldung: 13.04.1994
(73) Patentinhaber: METALLGESELLSCHAFT AG, D-60323 Frankfurt am Main (DE)
(72) Erfinder: Mayer-Schwinning, Gernot, D-62352 Bad Homburg (DE); Böning, Günter, D-60388 Frankfurt am Main (DE)

(56) Entgegenhaltungen:
- EP-A- 0 208 490
- EP-A- 0 371 945
- EP-A- 0 408 772
- DE-A- 3 300 490
- DE-A- 3 941 894

## Beschreibung

Die Erfindung bezieht sich auf ein Verfahren zur Abtrennung von halogenierten Dioxinen und Furanen aus Abgasen von Verbrennungsanlagen, insbesondere Müllverbrennungsanlagen.

Es ist bekannt, daß in den Abgasen von Verbrennungsanlagen halogenierte Dibenzodioxine und halogenierte Dibenzofurane enthalten sind, von denen einige Verbindungen außerordentlich toxisch wirken und die daher aus den Verbrennungsabgasen nahezu quantitativ abgetrennt werden müssen. Zur Vereinfachung werden die halogenierten Dibenzodioxine und die halogenierten Dibenzofurane nachfolgend als Dioxine und Furane bezeichnet.

Es ist bereits eine Vielzahl von Verfahren zur Abscheidung der Dioxine und Furane aus Verbrennungsabgasen bekannt.

Beispielsweise schlägt die DE-A-3 919 124 ein Verfahren zur Abscheidung von gesundheitsschädigenden polyzyklischen Kohlenwasserstoffen aus Abgasen von Abfallverbrennungsanlagen vor, bei dem die von Staub, HCl, HF, SOₓ, NOₓ und Schwermetallen vorgereinigten Abgase durch Absorption/Filtration im Temperaturbereich von 70 bis 160°C von den restlichen polyzyklischen Kohlenwasserstoffen und Schwermetallen befreit werden. Bei diesem Verfahren ist vorgesehen, daß die vorgereinigten Abgase zuerst in einem Reaktor mit feinverteilten Absorptionsmitteln vermischt und anschließend zu einem filtrierenden Abscheider geführt werden, wo auf dem Filtergewebe ein Absorptionsmittelkuchen erzeugt wird, den die Abgase durchströmen. Hierdurch erfolgt eine weitgehende Abscheidung von polyzyklischen Kohlenwasserstoffen. Das bekannte Verfahren benutzt als Absorptionsmittel z.B. Aktivkohle, Molekularsiebe, Natriumsulfid und Kalkhydrat.

Ferner sind Verfahren bekannt, bei denen kohlenstoffhaltige Adsorbentien in Fest- oder Rutschbetten eingesetzt werden, um organische Schadstoffe abzuscheiden.

Schließlich ist aus der EP-A-253 563 ein Verfahren zur Abtrennung von dampfförmigen schädlichen organischen Verbindungen aus einem von einer Verbrennungsanlage abgehenden heißen staubhaltigen Abgasstrom bekannt, das auch die Entfernung saurer Bestandteile aus dem Abgas einschließt. Bei diesem Verfahren wird der Abgasstrom bei einer Temperatur von 135 bis 400°C in eine Zerstäubungs-Absorptionskammer (Sprühabsorber) geleitet, in der eine wäßrige, basische Absorptionsflüssigkeit zerstäubt und das Abgas bei gleichzeitiger Verdampfung des in der Absorptionsflüssigkeit enthaltenen Wassers auf eine Temperatur von 180 bis 90° abgekühlt wird. In der Absorptionskammer wird ein partikelförmiges Material gebildet, welches die Reaktionsprodukte zwischen dem basischen Absorptionsmittel und den sauren Bestandteilen des Abgases sowie nicht umgesetztes Absorptionsmittel enthält. Das partikelförmige Material wird zusammen mit eventuell noch vorhandenem Staub in einem der Absorptionskammer nachgeschalteten Partikelabscheider vom Abgas getrennt. Bei dem Verfahren ist schließlich vorgesehen, daß pulverförmiger aktiver Kohlenstoff in einer Menge von 1 bis 800 mg/Nm³ Abgas zumindest an einer Stelle in den Abgasstrom eingeblasen wird, die entweder vor der Absorptionskammer, in der Absorptionskammer oder zwischen der Absorptionskammer und dem Partikelabscheider liegt. Der pulverförmige aktive Kohlenstoff wird in jedem Fall im Partikelabscheider zusammen mit dem partikelförmigen Material abgeschieden. Der Partikelabscheider ist als Schlauchfilter oder als Elektrofilter ausgebildet.

Alle bekannten Verfahren haben den Nachteil, daß ihre Abscheideleistung für Dioxine und Furane nicht ausreichend hoch ist. Bei dem aus der EP-A-253 563 bekannten Verfahren kommt hinzu, daß der Betrieb eines Elektrofilters bei 90 bis 180°C in Gegenwart von staubförmigem Kohlenstoff ein Sicherheitsrisiko darstellt, da sich der Kohlenstoff im Elektrofilter entzünden kann. Außerdem gibt es Hinweise darauf, daß Elektrofilter als sog. "Dioxin-Brüter" wirken, d.h., daß dort unter dem Einfluß des elektrischen Feldes und der erhöhten Betriebstemperatur des Elektrofilters Dioxine und Furane gebildet werden. In DE-A-3 941 894 wird ein Verfahren zum Abscheiden von organischen Schadstoffen aus Abgasen beschrieben, bei dem Aktivkohle als Absorptionsmittel eingesetzt wird.

Der Erfindung liegt die Aufgabe zugrunde, ein Verfahren zu schaffen, mit dem im Reingas ein Dioxin- und Furangehalt < 0,05 ng/Nm³ (angegeben als Toxizitätsäquivalent nach NATO-CCMS-Vorschrift) über den gesamten Betriebszeitraum sicher eingehalten werden kann.

Die der Erfindung zugrundeliegende Aufgabe wird dadurch gelöst, daß man
a) den Staub von den Abgasen abscheidet und die gasförmigen Schadstoffen HCl, HF, SO₂ und SO₃ durch Reaktion mit einem Absorptionsmittel abtrennt und
b) die so vorgereinigten Abgase einem Naßelektrofilter zuführt, wobei man unmittelbar vor Eintritt in das Filter 10 bis 500 mg pulverförmige Aktivkohle pro Nm³ zugibt.

Die Abtrennung des Staubs, bei dem es sich um die staubförmige Flugasche handelt, erfolgt in einem bei 200 bis 400°C arbeitenden Elektrofilter und/oder in mindestens einem Zyklon und/oder in mindestens einem Prallabscheider. Die anschließende Abtrennung der gasförmigen Schadstoffe HF, HCl, SO₂ und SO₃ erfolgt durch Reaktion mit einem trockenen Absorptionsmittel bei 200 bis 500°C und/oder durch Reaktion mit einem Absorptionsmittel in einem Sprühtrockner, wobei ein trockenes Reaktionsprodukt anfällt, und/oder durch Reaktion mit einem flüssigen Absorptionsmittel in mindestens einem Wäscher. Während der Abtrennung des Staubs und der gasförmigen Schadstoffe werden auch die Dioxine und Furane teilweise abgeschieden; dennoch sind im vorgereinigten Abgas die Dioxine und Furane in einer Menge enthalten, die als eine nicht zu tolerierende Belastung für die Umwelt anzusehen ist. In überraschender Weise hat sich gezeigt, daß der Dioxin- und Furan-Gehalt der vorgereinigten Abgase signifikant verwindert werden kann, wenn die vorgereinigten Abgase einem Naßelektrofilter zugeführt werden und wenn den Abgasen unmittelbar vor ihrem Eintritt in das Naßelektrofilter pulverförmige Aktivkohle zugegeben wird. Diese Arbeitsweise stellt kein Sicherheitsrisiko dar, denn die pulverförmige Aktivkohle kann sich im Naßelektrofilter nicht entzünden, da im Naßelektrofilter ständig ein Nebel aus feinen Wassertröpfchen vorhanden ist und eine Betriebstemperatur von weniger als 100°C herrscht. Im Naßelektrofilter entstehen auch keine Dioxine, denn die Dioxinwerte des Abgases wurden im Naßelektrofilter immer vermindert, während sie sich beim Durchgang durch ein trocken arbeitendes Elektrofilter in sehr vielen Fällen, insbesondere nach längerer Betriebszeit, erhöhten. Unter dem Begriff "pulverförmig" ist zu verstehen, daß die im Abgasstrom suspendierte Aktivkohle einen Teilchendurchmesser < 800 µm, vorzugsweise < 100 µm, hat und nicht granuliert ist. Der Begriff "Aktivkohle" umfaßt die aus kleinsten Graphitteilchen und/oder aus amorphem Kohlenstoff bestehenden Substanzen mit poröser Struktur und einer inneren Oberfläche zwischen 30 und 2000 m²/g, vorzugsweise 200 bis 1500 m²/g. Das erfindungsgemäße Verfahren gestattet die Einhaltung von Dioxin- und Furan-Grenzwerten von < 0,05 ng (angegeben als Toxizitätsäquivalent nach NATO-CCMS-Vorschrift) und eignet sich vorzugsweise zur Reinigung von Abgasen der Müllverbrennung.

In zweckmäßiger Ausgestaltung des erfindungsgemäßen Verfahrens ist vorgesehen, daß man 20 bis 200 mg pulverförmige Aktivkohle pro Nm³ zugibt.

Das erfindungsgemäße Verfahren kann mit besonders hoher Betriebssicherheit durchgeführt werden, denn man das Naßelektrofilter bei einer Temperatur von 40 bis 95°C mit einer Spannung von 20 bis 120 KV, einer Stromstärke von 50 bis 600 mA sowie einer Wassermenge von 0,002 bis 0,2 l/Nm³ vorgereinigtem Abgas betreibt, wobei man das Wasser in das Naßelektrofilter in der Nähe des Abgaseintritts einsprüht. In einem so betriebenen Naßelektrofilter erfolgt eine nahezu quantitative Entstaubung - also auch eine Abtrennung der pulverförmigen Aktivkohle -, so daß Staubgehalte im Reingas von < 10 mg/Nm³ resultieren. Außerdem werden auch die Wassertröpfchen im Elektrofilter vollständig zurückgehalten.

In zweckmäßiger Ausgestaltung des Verfahrens ist vorgesehen, daß man mit einer Spannung von 30 bis 80 KV arbeitet.

Schließlich ist in weiterer Ausgestaltung der Erfindung vorgesehen, daß man trockene Aktivkohle oder eine wäßrige Aktivkohle-Suspension im Strom des vorgereinigten Abgases suspendiert. In beiden Fällen wird eine gleichmäßige Verteilung des Feststoffs im Gasstrom erreicht.

Ein Vorteil des erfindungsgemäßen Verfahrens besteht darin, daß zumindest ein Teil des für den Betrieb des Naßelektrofilters benötigten Wassers durch Kondensation des im vorgereinigten Abgas enthaltenen Wasserdampfes im Naßelektrofilter erzeugt werden kann. Da die Verbrennungsabgase einen mehr oder weniger großen Wasserdampfgehalt haben, der entweder den Brennstoffen entstammt oder durch die quasi-trocken oder naß arbeitenden Verfahren zur Abtrennung der gasförmigen Schadstoffe in die Abgase eingebracht wird, ist es zur Minimierung des Wasserverbrauchs des Naßelektrofilters vorteilhaft, die Abkühlung im Naßelektrofilter soweit durchzuführen, daß zumindest ein Teil des für den Betrieb des Naßelektrofilters erforderlichen Wassers im Naßelektrofilter selbst durch Kondensation gebildet wird.

Ein weiterer Vorteil des erfindungsgemäßen Verfahrens besteht darin, daß das aktivkohlehaltige Abwasser des Naßelektrofilters den Verfahrensstufen zugeführt werden kann, in denen die Abscheidung der gasförmigen Schadstoffe durch eine nasse oder quasi-trockene Arbeitsweise erfolgt. Es ist also möglich, das Abwasser des Naßelektrofilters vollständig in das Reinigungsverfahren zurückzuführen, so daß die Produktion von Abwasser vermieden wird. Die Aktivkohle wird gemeinsam mit den Reaktionsprodukten aus dem Verfahrenskreislauf ausgeschleust, die in den nassen bzw. quasi-trockenen Reinigungsstufen anfallen.

In den Fällen, in denen die gasförmigen Schadstoffe HF, HCl, SO₂ und SO₃ auf trockenem Weg abgeschieden werden, oder in denen ein Aktivkohlegehalt der bei der Abscheidung gasförmiger Schadstoffe anfallenden Reaktionsprodukte nicht toleriert werden kann, ist es möglich, daß die Aktivkohle aus dem das Naßelektrofilter verlassenden Abwasser abfiltriert und danach verbrannt wird. Auf diesem Weg werden die von der Aktivkohle adsorbierten Dioxine und Furane in vorteilhafter Weise durch Verbrennung zerstört.

Bei der Durchführung des erfindungsgemäßen Verfahrens ist es aus technischen und wirtschaftlichen Gründen vorteilhaft, wenn die Abgase der Verbrennungsanlage durch Prallabscheidung im Dampferzeuger weitgehend entstaubt werden, wenn die entstaubten Abgase zur weitgehenden Abtrennung von HF, HCl, SO₂ und SO₃ in einem Sprühabsorber durch Reaktion mit einer wäßrigen Suspension von Ca(OH)₂ zur Reaktion gebracht werden, wenn aus den von den gasförmigen Schadstoffen befreiten Abgasen in einem Gewebefilter die trockenen, staubförmigen, im Sprühabsorber gebildeten Reaktionsprodukte abgetrennt werden, wenn die in den Abgasen enthaltenen restlichen Schadstoffe in einem Wäscher abgeschieden werden, wenn die so vorgereinigten Abgase mit Aktivkohle vermischt sowie in ein Naßelektrofilter geführt werden und wenn das aktivkohlehaltige Abwasser des Naßelektrofilters zur Herstellung der dem Sprühabsorber zugeführten Ca(OH)₂-Suspension verwendet wird. Mit dieser Verfahrensführung wurden über einen langen Betriebszeitraum Dioxin- und Furan-Grenzwerte von < 0,03 ng (angegeben als Toxizitätsäquivalent nach NATO-CCMS-Vorschrift) erzielt.

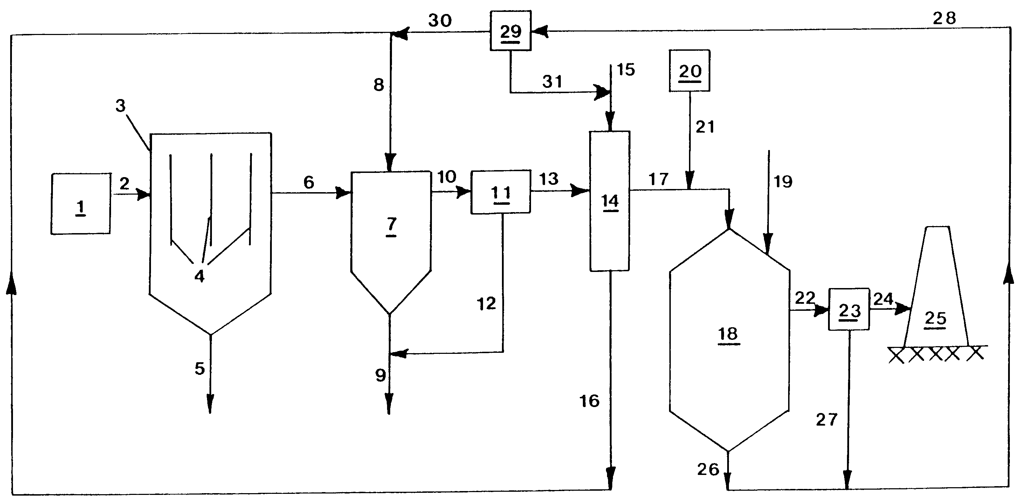

Der Gegenstand der Erfindung wird nachfolgend anhand der Zeichnung und eines Ausführungsbeispiels näher erläutert.

Aus dem Müllverbrennungsofen 1 wird das heiße Verbrennungsabgas über den Abgaskanal 2 in den Wärmeaustauscher 3 geführt, in dem Dampf erzeugt bzw. überhitzt wird. Das Verbrennungsabgas 2 kühlt sich dabei an den Heizflächen 4 auf eine Temperatur von ca. 350°C ab und wird gleichzeitig durch Prallabscheidung weitgehend entstaubt. Der angeschiedene Staub - also die staubförmige Flugasche - wird aus dem Wärmeaustauscher 3 über die Leitung 5 abgezogen. Das gekühlte und weitgehend entstaubte Abgas wird über die Leitung 6 in den Sprühabsorber 7 geführt, in den über die Leitung 8 eine wäßrige Suspension von Ca(OH)₂ eingebracht wird. Im Sprühabsorber wird das Abgas auf eine Temperatur von ca. 130°C abgekühlt, wobei gleichzeitig das Wasser der Ca(OH)₂-Suspension verdampft. Außerdem reagiert das Ca(OH)₂ mit den gasförmigen Schadstoffen HF, HCl, SO₂ und SO₃ unter Bildung von CaF₂, CaCl₂, CaSO₃ und CaSO₄. Diese Reaktionsprodukte sowie unverbrauchtes Ca(OH)₂ allen als feinkörniges Produkt an und werden über die Leitung 9 aus dem Sprühabsorber 7 abgeführt. Im Sprühabsorber 7 werden auch Staubteilchen niedergeschlagen, die im Wärmetauscher 3 nicht aus dem Abgas entfernt werden konnten.

Das weitgehend entstaubte und weitgehend von den gasförmigen Schadstoffen befreite Abgas gelangt über die Leitung 10 in ein Gewebefilter 11, in dem die staubförmigen Partikel abgetrennt werden, die in dem Abgasstrom enthalten sind, der den Sprühabsorber 7 verläßt. Das Gewebefilter 11 wird periodisch abgereinigt, und der abgereinigte Staub gelangt über die Leitung 12 in die Leitung 9. Das aus dem Gewebefilter 11 austretende Abgas gelangt über die Leitung 13 in den Wäscher 14, der auch mehrstufig ausgeführt werden kann. Hier werden restliche Staubpartikel sowie insbesondere restliche gasförmige Schadstoffe ausgewaschen. Dem Wäscher 14 wird über die Leitung 15 eine wäßrige Suspension von Ca(OH)₂ sowie ggf. Wasser zugeführt. Die den Wäscher 14 verlassende Waschflüssigkeit wird über die Leitung 16 in die Leitung 8 geführt und gelangt somit in den Sprühabsorber 7. Im Wäscher 14 wird das Abgas auf eine Temperatur von ca. 60 bis 70° abgekühlt.

Der den Wäscher 14 verlassende Abgasstrom gelangt über die Leitung 17 in das Naßelektrofilter 18, in das über die Leitung 19 Wasser eingedüst wird. In die Leitung 17 wird aus dem Vorratsbunker 20 über die Leitung 21 pulverförmige Aktivkohle eingebracht. Das aus dem Naßelektrofilter 18 austretende Abgas gelangt über die Leitung 22 in den Tropfenabscheider 23 und anschließend über die Leitung 24 in den Kamin 25, von wo es in die Atmosphäre entlassen werden kann.

Das aktivkohlehaltige Abwasser, welches das Naßelektrofilter 18 über die Leitung 26 und den Tropfenabscheider 23 über die Leitung 27 verläßt, wird über die Leitung 28 einem Lösebehälter 29 zugeführt. Im Lösebehälter 29 wird Ca(OH)₂ zu einer wäßrigen Suspension verarbeitet, die über die Leitungen 30 und 8 in den Sprühabsorber 7 gelangt. Aus dem Lösebehälter 29 wird über die Leitung 31 ein Teilstrom der Ca(OH)₂-Suspension in die Leitung 15 gefördert und dort ggf. mit Wasser verdünnt.

Das in der Leitung 2 geführte Verbrennungsabgas hatte einen Staubgehalt von 4 bis 5 g/Nm³, und das aus dem Kamin 25 austretende Reingas hatte einen Reststaubgehalt < 10 mg/Nm³. Der in der Leitung 2 geführte Abgasstrom enthielt pro Nm³ folgende gasförmigen Schadstoffe:
HF = 35 mg, HCl 1450 mg, SO₂ 900 mg und SO₃ = 70 mg.

Das aus dem Kamin 25 austretende Reingas enthielt kein HF, HCl und SO₃; der SO₂-Gehalt lag unter 5 mg/Nm³. Pro Mol der entfernten gasförmigen Schadstoffe wurde 1,35 Mol Ca(OH)₂ verbraucht. In das Naßelektrofilter 18 wurden pro Nm³ Abgas 100 mg Aktivkohle sowie 0,1 l Wasser eingebracht. Dem Wäscher 14 wurden pro Nm³ Abgas ebenfalls 0,1 l Wasser zugeführt. Die Herstellung der Ca(OH)₂-Suspension erfolgte ausschließlich unter Verwendung des Abwassers des Naßelektrofilters 18 bzw. des Tropfenabscheiders 23.

Die Bilanz der Dioxine und Furane wurde in zwei Versuchsperioden ermittelt, die jeweils 7 Tage andauerten. Der durchschnittliche Gehalt an Dioxinen und Furanen in dem in Leitung 6 geführten Abgasstrom lag in beiden Versuchsperioden bei 2,83 ng. Der in Leitung 10 geführte Abgasstrom wies während beider Versuchsperioden einen durchschnittlichen Dioxin- und Furan-Gehalt von 0,56 ng/Nm³ auf. In der Leitung 17 wurde vor der Zugabe der Aktivkohle ein durchschnittlicher Dioxin- und Furan-Gehalt von 0,224 ng/Nm³ gemessen. Im Kamin 25 betrug der durchschnittliche Dioxin- und Furan-Gehalt während der ersten Meßperiode 0,029 ng/Nm³ und während der zweiten Meßperiode 0,023 ng/Nm³. Während beider Meßperioden wurde min einer Aktivkohlemenge von 100 mg/Nm³ gearbeitet.

Bei einem Vergleichsversuch, bei dem in den Sprühabsorber 7 50 mg Aktivkohle pro Nm³ Abgas eingebracht wurden, ergab sich in der Leitung 10 zwar ein durchschnittlicher Dioxin- und Furan-Gehalt von 0,021 ng/Nm³; dieser Wert stieg aber in der Leitung 17 auf 0,071 ng/Nm³ an. Bei Zugabe von 50 mg Aktivkohle pro Nm³ Abgas in die Leitung 17 konnte im Naßelektrofilter eine Reduktion des durchschnittlichen Dioxin- und Furangehalts auf 0,036 ng erzielt werden. Der Vergleichsversuch zeigt, daß die Zugabe der Aktivkohle unmittelbar vor dem Eintritt des vorgereinigten Abgases in das Naßelektrofilter gegenüber der Aktivkohlezufuhr in den Sprühabsorber 7 Vorteile hat.

Die Analytik der Dioxine und Furane erfolgte nach VDI-Vorschrift 3499, Blatt 2, "Kondensationsmethode, analysiert mittels GC/HMS".

Die Dioxin- und Furan-Gehalte wurden als Toxizitätsäquivalent (ITE) nach NATO-CCMS-Vorschrift berechnet.

## Patentansprüche

1. Verfahren zur Abtrennung von Dioxinen und Furanen aus Abgasen von Verbrennungsanlagen, wobei man
a) zunächst den Staub von den Abgasen abscheidet und die gasförmigen Schadstoffen HF, HCl, SO₂ und SO₃ durch Reaktion mit einem Absorptionsmittel abtrennt und
b) die so vorgereinigten Abgase einem Naßelektrofilter zuführt, wobei man unmittelbar vor Eintritt in das Filter 10 bis 500 mg pulverförmige Aktivkohle pro Nm³ Abgase zugibt.

2. Verfahren nach Anspruch 1, dadurch gekennzeichnet, daß man 20 bis 200 mg pulverförmige Aktivkohle pro Nm³ zugibt.

3. Verfahren nach Anspruch 1 oder 2, dadurch gekennzeichnet, daß man das Naßelektrofilter bei einer Temperatur von 40 bis 95°C mit einer Spannung von 20 bis 120 KV, einer Stromstärke von 50 bis 600 mA sowie einer Wassermenge von 0,002 bis 0,2 l/Nm³ vorgereinigtem Abgas betreibt, wobei man das Wasser in das Naßelektrofilter in der Nähe des Abgaseintritts einsprüht.

4. Verfahren nach Anspruch 3, dadurch gekennzeichnet, daß man mit einer Spannung von 30 bis 80 KV arbeitet.

5. Verfahren nach Anspruch 1 bis 4, dadurch gekennzeichnet, daß man trockene Aktivkohle oder eine wäßrige Aktivkohle-Suspension im Strom der vorgereinigten Abgase suspendiert.

## Claims

1. A process of separating dioxins and furans from waste gases of incineration plants, wherein
a) first of all the dust is separated from the waste gases, and the gaseous pollutants HF, HCl, SO₂ and SO₃ are separated by reaction with an adsorbent, and
b) the waste gases thus precleaned are supplied to a wet precipitator, where directly before entrance into the precipitator 10 to 500 mg pulverized activated carbon per Nm³ waste gases are added.

2. The process as claimed in claim 1, characterized in that 20 to 200 mg pulverized activated carbon per Nm³ are added.

3. The process as claimed in claim 1 or 2, characterized in that the wet precipitator is operated at a temperature of 40 to 95°C with a voltage of 20 to 120 KV, a current of 50 to 600 mA as well as an amount of water of 0.002 to 0.2 l/Nm³ precleaned waste gas, with the water being sprayed into the wet precipitator in the vicinity of the waste gas inlet.

4. The process as claimed in claim 3, characterized in that a voltage of 30 to 80 KV is used.

5. The process as claimed in claims 1 to 4, characterized in that dry activated carbon or an aqueous suspension of activated carbon is suspended in the flow of the precleaned waste gas.

## Revendications

1. Procédé de séparation de dioxines et furannes d'effluents gazeux d'installations d'incinération qui consiste
a) à faire se déposer la poussière des effluents gazeux et à séparer les substances polluantes gazeuses que sont HF, HCl, SO₂ et SO₃ par réaction sur un agent d'absorption et
b) à envoyer les effluents gazeux ainsi pré-épurés à un électrofiltre en voie humide en ajoutant juste avant l'entrée dans le filtre de 10 à 500 mg de charbon actif pulvérulent par m³ normal d'effluents gazeux.

2. Procédé suivant la revendication 1, caractérisé en ce qu'il consiste à ajouter de 20 à 200 mg de charbon actif pulvérulent par m³ normal.

3. Procédé suivant la revendication 1 ou 2, caractérisé en ce qu'il consiste à faire fonctionner l'électrofiltre en voie humide à une température de 40 à 95°C sous une tension de 20 à 120 KV, une intensité de courant de 50 à 600 mA ainsi qu'avec une quantité d'eau de l'effluent gazeux pré-épuré de 0,002 à 0,2 l/m³ normal, l'eau étant projetée dans l'électrofiltre en voie humide à proximité de l'entrée de l'effluent gazeux.

4. Procédé suivant la revendication 3, caractérisé en ce qu'il consiste à opérer à une tension de 30 à 80 KV.

5. Procédé suivant l'une des revendications 1 à 4, caractérisé en ce qu'il consiste à mettre du charbon actif sec ou une suspension aqueuse de charbon actif en suspension dans le courant de l'effluent gazeux pré-épuré.
